# EUROPEAN PATENT APPLICATION

(11) **EP 3 575 122 A1**
(43) Date of publication of application: **04.12.2019**
(21) Application number: 19175291.4
(22) Date of filing: 20.05.2019
(51) Int. Cl.: B60K 35/00, B60K 37/00, B60K 37/02, B60K 37/06, B62D 1/06

(54) **INTERIOR STRUCTURE**

(30) Priority: 30.05.2018 JP 2018103538
(71) Applicant: TOYOTA JIDOSHA KABUSHIKI KAISHA, Toyota-Shi, Aichi-Ken 471-8571 (JP)
(72) Inventor: YAMADA, Yoshinori, TOYOTA-SHI, AICHI-KEN, 471-8571 (JP); ITO, Masaki, TOYOTA-SHI, AICHI-KEN, 471-8571 (JP)
(74) Representative: Cabinet Beau de Loménie

(57) **Abstract**

There is provided an interior structure including: a display section (20) that is provided at an instrument panel (12); a styling section (46) that is provided at a steering wheel (14) and that has a similar profile to the display section (20); and an operation section (50) that is disposed at the styling section (46) and that is associated with the display section (20).

## Description

### BACKGROUND

### Technical Field

The present disclosure relates to an interior structure.

### Related Art

Japanese Patent Application Laid-Open (JP-A) No. 2013-14264 discloses an automobile interior structure capable of making a vehicle cabin interior space feel wide and conveying a feeling of spaciousness to an occupant, without affecting the shape, structure, and so on of components inside the vehicle cabin.

In this interior structure, graining with a pattern combining multiple predetermined shapes is formed on a styling face of an instrument panel of the automobile. The graining is formed such that the predetermined shapes gradually become smaller on progression from a vehicle width direction central portion toward the vehicle width direction outer sides of the styling face.

In this interior structure, an operation panel provided on the styling face of the instrument panel has the same predetermined shapes as the graining, thereby conveying a unified feel to the design. However, further consideration is required in order to improve the ease of visual recognition of the operation panel.

### SUMMARY

An object of the present disclosure is to provide an interior structure capable of improving the ease of visual recognition of a display section or a switch, while maintaining a unified feel to the design.

An interior structure of a first aspect includes a display section that is provided at an instrument panel, a styling section that is provided at a steering wheel and that has a similar profile to the display section, and an operation section that is disposed at the styling section and that is associated with the display section.

The "styling section" refers to a location that imparts a different visual impression to an occupant, due to having a different color, material, shape, or the like from other locations of the steering wheel. Examples of the "operation section associated with the display section" include a switch capable of operating vehicle functions displayed on a monitor serving as the display section, or a switch coordinated with an input operation of a touch panel serving as the display section.

In the interior structure of the first aspect, the display section and the styling section provided at the steering wheel have similar profiles, thereby enabling the unified feel of the design to be maintained. Moreover, the driver is made aware of correspondence relationships between the display section and the operation section, thereby enabling the ease of visual recognition of the display section and the switch to be improved.

An interior structure of a second aspect includes an exposed section that is exposed at a surface of an instrument panel, a styling section that is provided at a steering wheel and that has a similar profile to the exposed section, and an operation section that is disposed at the styling section and that operates a device associated with the exposed section.

The "exposed section" refers to a component such as a meter panel or a blower outlet that is provided at the instrument panel and that has a predetermined function. The "styling section" is as previously described. The "device associated with the exposed section" corresponds for example to a multi-display on a meter panel in cases in which the meter panel is the exposed section, or an air conditioner in cases in which a blower outlet is the exposed section.

In the interior structure of the second aspect, the exposed section and the styling section provided at the steering wheel have similar profiles, thereby enabling the unified feel of the design to be maintained. Moreover, the driver is made aware of correspondence relationships between the device associated with the exposed section and the operation section, thereby enabling the ease of visual recognition of the exposed section and the switch to be improved.

An interior structure of a third aspect is the interior structure of the first or the second aspect, wherein a profile of a vehicle width direction end portion of the instrument panel and a profile of the steering wheel are associated with each other.

In the interior structure of the third aspect, the profiles of the styling section, and of display section or the exposed section, are associated with each other, and the profile of the vehicle width direction end portion of the instrument panel and the profile of the steering wheel are also associated with each other. This enables more of a coordinated feel to the design to be achieved.

The present disclosure enables the ease of visual recognition of a display section or a switch to be improved, while maintaining a unified feel to the design.

### BRIEF DESCRIPTION OF THE DRAWINGS

Exemplary embodiments of the present disclosure will be described in detail based on the following figures, wherein:
Fig. 1 is a schematic diagram of an interior structure according to a first exemplary embodiment;
Fig. 2 is a schematic diagram of an interior structure according to a second exemplary embodiment; and
Fig. 3 is a schematic diagram of an interior structure according to a third exemplary embodiment.

### DETAILED DESCRIPTION

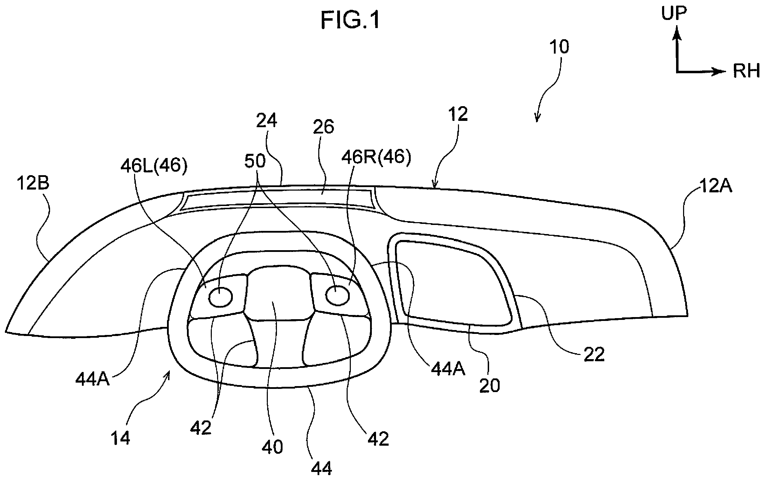

Explanation follows regarding an interior structure according to exemplary embodiments of the present disclosure, with reference to Fig. 1 to Fig. 3. Each of the drawings is a schematic diagram of an interior when viewing toward the front of a vehicle from a vehicle cabin. In the below explanation, "face-on view" refers to viewing towards the vehicle front from the vehicle rear side.

### First Exemplary Embodiment

Fig. 1 illustrates an interior structure 10 of a first exemplary embodiment. The interior structure 10 of the present exemplary embodiment is configured including an instrument panel 12 extending along the vehicle width direction at the front of the vehicle cabin, and a steering wheel 14 provided on the vehicle width direction left side (a driving seat side).

The instrument panel 12 bulges toward the vehicle front at a vehicle width direction central portion, and curves toward the vehicle rear side on progression from the vehicle width direction center toward vehicle width direction outer edges 12A, 12B. The instrument panel 12 also curves toward the vehicle lower side near the edges 12A, 12B. As viewed by a driver, the instrument panel 12 therefore has a profile that curves sharply from the vehicle width direction toward the vehicle lower side at the edges 12A, 12B.

A center display 20, configuring a display section with a substantially trapezoidal shaped screen, is provided at the instrument panel 12 so as to be located on the vehicle width direction right side of the steering wheel 14. The center display 20 is housed in a monitor panel 22 projecting toward the side of the driver. The screen of the center display 20 thereby faces slightly away from the vehicle rear side and toward the driver. The center display 20 of the present exemplary embodiment is a liquid crystal touch panel, and is capable of displaying information and performing settings relating to device drive functions such as cruise control, parking assist, vehicle stability control (VSC), and to comfort functions such as air conditioning, car navigation, audio, and so on.

The steering wheel 14 is provided on the driving seat side of the instrument panel 12. The steering wheel 14 includes a boss 40 fixed to a steering shaft, which is not illustrated in the drawings, spokes 42 respectively extending from the boss 40 toward both vehicle width direction sides and to the vehicle lower side, and a ring shaped rim 44 connected to the spokes 42. Portions of the steering wheel 14 above the spokes 42 on both vehicle width direction sides respectively configure grip portions 44A that are gripped by the driver. Note that parts of the grip portions 44A where the driver places their thumbs may be indented so as to be easily gripped.

Note that the steering wheel 14 of the present exemplary embodiment is an irregularly shaped steering wheel. The vehicle upper and lower sides of the rim 44 are substantially flat, and both vehicle width direction sides of the rim 44 slope toward the vehicle width direction center on progression toward the vehicle upper side, such that the rim 44 has a substantially trapezoidal shaped profile. In face-on view, the rim 44 sharply curves from the vehicle width direction toward the vehicle lower side near to the grip portions 44A. In the present exemplary embodiment, an outer profile of the grip portion 44A on the vehicle width direction right side is similar to an outer profile of the edge 12A of the instrument panel 12. Note that an outer profile of the grip portion 44A on the vehicle width direction left side has left-right symmetry to the outer profile of the edge 12A.

Styling sections 46, each of which is a separate member to the corresponding spoke 42 and has a substantially trapezoidal shape in face-on view, are respectively provided at the spokes 42 on both vehicle width direction sides. The styling sections 46 include a left side styling section 46L disposed at the spoke 42 on the vehicle width direction left side, and a right side styling section 46R disposed at the spoke 42 on the vehicle width direction right side. The right side styling section 46R has a similar profile to the center display 20. A profile of the left side styling section 46L has left-right symmetry to the profile of the center display 20. Steering wheel switches 50, serving as an operation section, are respectively disposed at the styling sections 46.

Each of the steering wheel switches 50 is for example configured including a circular ring shaped cross-key and a select key provided at the center thereof. The steering wheel switches 50 of the present exemplary embodiment are linked to the center display 20, and are capable of operating settings of vehicle functions displayed on the center display 20. The steering wheel switches 50 are capable of operating settings such as adjusting the temperature setting of an air conditioner, adjusting an audio volume, and switching display contents on the center display 20.

A meter panel 24 is provided on the instrument panel 12 so as to extend along the vehicle width direction at the vehicle upper side of the steering wheel 14. Meters 26 capable of displaying vehicle speed, engine revolution speed, distance traveled, fuel consumption, and so on are disposed in the meter panel 24.

In the interior structure 10 of the present exemplary embodiment configured as described above, the center display 20 and the styling sections 46 of the steering wheel 14 have similar profiles, thereby imparting a unified feel to the design. The center display 20 and the styling sections 46 are disposed in a row along the vehicle width direction. In the present exemplary embodiment, since the center display 20 and the steering wheel switches 50 disposed at the styling sections 46 are associated with each other, it is easier for the driver to ascertain the operation target of the steering wheel switches 50. Namely, the interior structure 10 of the present exemplary embodiment enables the ease of visual recognition of the center display 20 and the steering wheel switches 50 to be improved, while maintaining a unified feel to the design.

In the present exemplary embodiment, the outer profile of the edge 12A of the instrument panel 12 and the outer profile of the grip portion 44A on the vehicle width direction right side of the steering wheel 14 are similar to each other. Thus, the styling section 46, the grip portion 44A, the center display 20, and the edge 12A, disposed in sequence on progression from the driving seat side toward a front passenger seat side, are modelled so as to have recurring forms. The interior structure 10 of the present exemplary embodiment thereby enables more of a coordinated feel to the design to be achieved.

In the steering wheel 14 of the present exemplary embodiment, the vehicle upper sides of the grip portions 44A face the vehicle width direction inner side. When a person stretches out their arms in a natural state, their thumbs face the center of their body, and their fingers face the exterior of their body. Thus, in the present exemplary embodiment, the orientation of the grip of the driver when gripping the steering wheel 14 is the same as the orientation of the grip portions 44A.

In the steering wheel 14 of the present exemplary embodiment, configuring the rim 44 with a substantially trapezoidal shaped profile enables styling to be improved and the burden on the shoulders of the driver when gripping the steering wheel 14 to be alleviated, compared to an irregularly shaped steering wheel of a simple rectangular shaped profile.

### Second Exemplary Embodiment

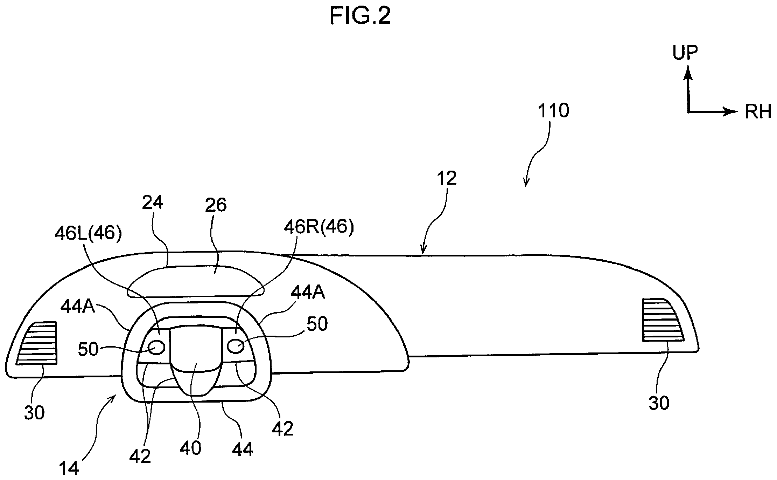

Fig. 2 illustrates an interior structure 110 of a second exemplary embodiment. Note that similar configuration to that in the first exemplary embodiment is appended with the same reference numerals. Explanation mainly follows regarding parts with a different profile.

In the present exemplary embodiment, substantially trapezoidal shaped blower outlets 30, serving as an exposed section, are respectively provided on both vehicle width direction end portions of the instrument panel 12. In the present exemplary embodiment, the blower outlets 30 and the styling sections 46 of the steering wheel 14 have similar profiles to each other. The blower outlets 30 are a configuration element of an air conditioner, this being a device installed in the vehicle. In the present exemplary embodiment, the steering wheel switches 50 respectively disposed at the styling sections 46 are capable of operating the air conditioner.

In the interior structure 110 of the present exemplary embodiment configured as described above, the blower outlets 30 and the styling sections 46 of the steering wheel 14 have similar profiles to each other, thereby imparting a unified feel to the design. The blower outlets 30 and the styling sections 46 are disposed in a row along the vehicle width direction. In the present exemplary embodiment, the blower outlets 30 and the steering wheel switches 50 disposed at the styling sections 46 are associated with each other, making it easier for the driver to ascertain the operation target of the steering wheel switches 50. Namely, the interior structure 110 of the present exemplary embodiment enables the ease of visual recognition of the blower outlets 30 and the steering wheel switches 50 to be improved, while maintaining a unified feel to the design.

### Third Exemplary Embodiment

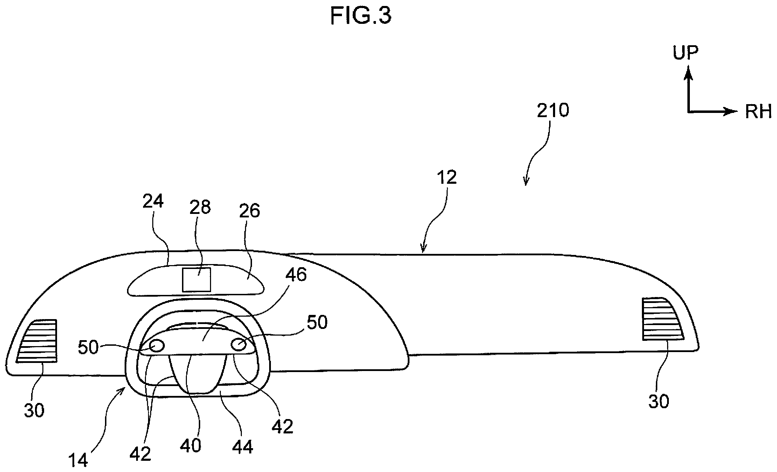

Fig. 3 illustrates an interior structure 210 of a third exemplary embodiment. Note that similar configuration to that in the first and second exemplary embodiments is appended with the same reference numerals. Explanation mainly follows regarding parts with a different profile.

In the present exemplary embodiment, a substantially trapezoidal shaped meter panel 24, serving as an exposed section, is provided on the instrument panel 12 so as to be located at the vehicle upper side of the steering wheel 14. Moreover, a substantially trapezoidal shaped styling section 46 is provided at the steering wheel 14 so as to extend from the boss 40 and across the spokes 42 on both vehicle width direction sides. In the present exemplary embodiment, the meter panel 24 and the styling section 46 have similar profiles to each other.

In addition to the meters 26, a multi-display 28, serving as a device capable of displaying various information, is also provided on the meter panel 24. Examples of information displayed on the multi-display 28 include a fuel consumption graph, an energy monitor, a driving guide, and a door open/closed status. In the present exemplary embodiment, the steering wheel switches 50 respectively disposed at both vehicle width direction sides of the styling section 46 are capable of switching and setting the information displayed on the multi-display 28.

In the interior structure 210 of the present exemplary embodiment configured as described above, the meter panel 24 and the styling section 46 of the steering wheel 14 have similar profiles to each other, thereby imparting a unified feel to the design. In the present exemplary embodiment, the multi-display 28 disposed on the meter panel 24 and the steering wheel switches 50 disposed at the styling section 46 are associated with each other, making it easier for the driver to ascertain the operation target of the steering wheel switches 50. Namely, the interior structure 210 of the present exemplary embodiment enables the ease of visual recognition of the meter panel 24 (multi-display 28) and the steering wheel switches 50 to be improved, while maintaining a unified feel to the design.

### Supplement

In each of the above exemplary embodiments, an example has been given of a vehicle in which the driving seat is located on the vehicle width direction left side. However, there is no limitation thereto. The present disclosure may be applied to a vehicle in which the driving seat is located on the vehicle width direction right side.

## Claims

1. An interior structure comprising:
a display section (20) that is provided at an instrument panel (12);
a styling section (46) that is provided at a steering wheel (14) and that has a similar profile to the display section; and
an operation section (50) that is disposed at the styling section and that is associated with the display section.

2. The interior structure of claim 1, wherein:
the styling section (46) is respectively provided at spokes (42) on both vehicle width direction sides of the steering wheel (14); and
the display section (20) and the styling section (46) are disposed in a row along a vehicle width direction.

3. An interior structure comprising:
an exposed section (30) that is exposed at a surface of an instrument panel (12);
a styling section (46) that is provided at a steering wheel (14) and that has a similar profile to the exposed section; and
an operation section (50) that is disposed at the styling section and that operates a device associated with the exposed section.

4. The interior structure of claim 3, wherein:
the styling section (46) is respectively provided at spokes (42) on both vehicle width direction sides of the steering wheel (14); and
the exposed section (30) and the styling section (46) are disposed in a row along a vehicle width direction.

5. The interior structure of any one of claim 1 to claim 4, wherein a profile of a vehicle width direction end portion of the instrument panel (12A) and a profile of the steering wheel (14) are associated with each other.
